(19) Europäisches Patentamt / European Patent Office / Office européen des brevets

(11) **EP 1 598 720 B1**

(12) **FASCICULE DE BREVET EUROPEEN**

(45) Date de publication et mention
de la délivrance du brevet:
**01.08.2007 Bulletin 2007/31**

(51) Int Cl.:
***G05D 1/06*** (2006.01)

(21) Numéro de dépôt: **05290735.9**

(22) Date de dépôt: **04.04.2005**

(54) **Indicateur de pilotage déterminant la pente maximale pour le pilotage d'un aéronef en suivi de terrain**

Steuerungsanzeige mit Ermittlung der maximalen Steigung zum Steuern eines Flugzeuges im Bodenfolgeflug

Piloting indicator determining the maximum slope for piloting un aircraft during terrain following flight

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.05.2004 FR 0405375**

(43) Date de publication de la demande:
**23.11.2005 Bulletin 2005/47**

(73) Titulaire: **AIRBUS France**
**31060 Toulouse (FR)**

(72) Inventeurs:
• **Artini, Franck**
**31000 Toulouse (FR)**
• **Demortier, Jean-Pierre**
**32200 Maurens (FR)**
• **Bouchet, Christophe**
**31000 Toulouse (FR)**

(74) Mandataire: **Hauer, Bernard**
**Cabinet Bonnétat**
**29, Rue de Saint-Pétersbourg**
**75008 Paris (FR)**

(56) Documents cités:
GB-A- 2 310 184     US-A- 5 675 328
US-A1- 2001 056 316     US-B1- 6 262 674

**Description**

La présente invention concerne un indicateur de pilotage pour le pilotage d'un aéronef en suivi de terrain.

Un tel indicateur de pilotage est plus spécifiquement adapté à un avion, en particulier un avion de transport militaire, qui présente un faible rapport poussée/poids et une forte inertie, et dont les temps de manoeuvre sont relativement lents.

Bien que non exclusivement, la présente invention s'applique plus particulièrement à un vol à basse altitude. On entend par vol à basse altitude, le vol le long d'une trajectoire de vol (à basse altitude) permettant à un aéronef de suivre au plus près le terrain survolé, notamment pour éviter de se faire repérer. Une telle trajectoire de vol à basse altitude est donc située à une hauteur de terrain prédéterminée, par exemple 500 pieds (ou 150 mètres).

Un vol à basse altitude suppose donc que l'on vole le plus bas possible dans les vallées pour bénéficier d'un masquage efficace à l'aide du relief environnant, tout en étant toujours en mesure bien entendu de pouvoir survoler les crêtes les plus hautes qui se présentent à l'avant de l'aéronef. Lorsque l'aéronef est piloté manuellement par le pilote, c'est-à-dire sans pilote automatique ou directeur de vol engagé, toute la charge du pilotage à basse altitude repose sur le pilote.

Dans une telle situation, le pilote dispose en général uniquement d'un système d'anti-collision du sol, du type GCAS ("Ground Collision Avoidance System" en anglais), pour éviter une collision avec le sol. Ce système usuel fournit une alarme lorsqu'une manoeuvre ne permet pas de survoler le terrain à l'avant de l'aéronef, en maintenant des conditions de vol définies. Ce système utilise des modèles théoriques de montée, établis par un aéronef nominal, c'est-à-dire non dégradé. Ainsi, si l'aéronef a subi des dommages affectant ses capacités de montée, le système fournit des informations erronées par rapport à la situation actuelle. Ce système connu ne fournit donc aucune indication sur les performances réelles de montée maximale de l'aéronef.

Par conséquent, le pilote ne dispose pas d'informations spécifiques précises (basées sur l'état actuel de l'aéronef) concernant la capacité maximale de l'aéronef à survoler une crête en aval dans le sens de vol. Or, on sait que la connaissance de la capacité maximale de montée de l'aéronef, permettrait au pilote de descendre au plus bas dans les vallées jusqu'à ce qu'il arrive à la limite pour pouvoir remonter et franchir la crête devant lui, ce qui augmenterait le masquage de l'aéronef par le terrain.

Par ailleurs, par le document US-6 262 674, on connaît un indicateur de pilotage qui est susceptible de présenter sur un écran de visualisation une poussée potentielle des moteurs. Cet indicateur de pilotage comporte :

-   un ensemble de sources d'informations ;
-   une unité de calcul qui est reliée audit ensemble de sources d'informations et qui détermine, à partir d'informations issues dudit ensemble de sources d'informations, au moins une pente totale maximale de l'aéronef, qui correspond à la poussée maximale disponible sur les moteurs ; et
-   un dispositif de visualisation, par exemple de type tête haute, qui comporte un écran de visualisation, qui est relié à ladite unité de calcul, et qui présente, sur l'écran de visualisation, au moins un moyen d'indication qui indique ladite pente totale maximale.

La présente invention a pour objet un indicateur de pilotage pour aéronef, permettant de remédier aux inconvénients précités.

A cet effet, selon l'invention, ledit indicateur de pilotage, du type comportant :

-   un ensemble de sources d'informations ;
-   une unité de calcul qui est reliée audit ensemble de sources d'informations et qui détermine, à partir d'informations issues dudit ensemble de sources d'informations, au moins une pente totale maximale de l'aéronef, qui correspond à la poussée maximale disponible sur les moteurs et est obtenue à partir de la mesure de la performance actuelle de l'aéronef ; et
-   un dispositif de visualisation tête haute qui comporte un écran de visualisation, qui est relié à ladite unité de calcul, et qui présente, sur l'écran de visualisation, au moins un moyen d'indication qui indique ladite pente totale maximale,

est remarquable en ce que ledit dispositif de visualisation tête haute présente ledit moyen d'indication sur l'écran de visualisation en l'associant au relief du terrain existant vers l'avant de l'aéronef et visible en surimpression sur ledit écran de visualisation de manière à permettre de montrer, lorsque ledit moyen d'indication est situé au-dessus du relief visible, que l'aéronef est susceptible de voler au-dessus dudit relief du terrain lorsqu'il vole selon ladite pente totale maximale. Avantageusement, ledit ensemble de sources d'informations fournit à l'unité de calcul au moins certaines des informations suivantes : l'état cinétique actuel, l'état atmosphérique actuel, l'altitude actuelle et une polaire aérodynamique de l'aéronef.

Dans un mode de réalisation préféré, ladite unité de calcul détermine ladite pente totale maximale comme la pente de l'aéronef s'il volait à une vitesse optimale de montée (avec la poussée maximale disponible sur les moteurs) permettant d'obtenir la pente de montée la plus importante, et ledit moyen d'indication indiquant cette pente totale maximale est associé au relief du terrain, visible en surimpression sur ledit écran de visualisation, et permet de montrer si l'aéronef est susceptible de voler au-dessus dudit relief du terrain, lorsqu'il vole à ladite vitesse optimale (de meilleure pente).

Ainsi, grâce à l'invention, le pilote dispose d'une information concernant la pente totale maximale que l'aéronef est en mesure de voler, s'il adapte sa vitesse (généralement la réduit) à ladite vitesse optimale. A la différence du système d'anti-collision du sol précité, l'indicateur de pilotage conforme à l'invention détermine la meilleure capacité de montée à la vitesse optimale, à partir de la mesure de l'état actuel de l'aéronef. Ainsi, le pilote a connaissance des performances maximales réelles de l'aéronef, concernant la pente de montée, et donc d'informations sur la meilleure capacité de l'aéronef à franchir le relief (crêtés, ...) du terrain environnant.

En variante, ladite unité de calcul peut déterminer ladite pente totale maximale comme la pente de l'aéronef, s'il volait en maintenant sa vitesse courante et en sélectionnant la poussée maximale disponible sur les moteurs. Dans ce cas, le pilote a connaissance (grâce à l'invention) des performances de montée maximales réelles de l'aéronef, en maintenant la vitesse de vol actuelle.

De plus, comme ledit moyen d'indication est présenté directement en surimpression du relief du terrain, l'indicateur de pilotage conforme à l'invention est très avantageux d'un point de vue opérationnel.

On notera que la pente totale est une donnée qui représente l'énergie totale de l'aéronef, c'est-à-dire la somme de l'énergie potentielle et de l'énergie cinétique. Aussi, ledit moyen d'indication indique le partage d'énergie courant de l'aéronef entre l'énergie cinétique et l'énergie potentielle et le gain en performances de montée obtenu, si une quantité donnée d'énergie cinétique est transformée en énergie potentielle, en adaptant (en réduisant) la vitesse actuelle de l'aéronef à ladite vitesse optimale.

Par conséquent, grâce à l'invention, on peut visualiser la pente de montée réelle que l'on obtiendra en sélectionnant le régime moteur maximal pour la vitesse optimale de montée (ou en variante, pour la vitesse actuelle de vol), ainsi que la pente de montée réelle que l'on obtiendrait si une panne moteur intervenait en sélectionnant la vitesse de montée optimale (ou en variante, en maintenant la vitesse actuelle), les moteurs restant opérationnels étant au régime maximal. Ces indications sont conformes aux performances réelles de l'aéronef, même en cas d'aéronef dégradé (par exemple porte ouverte, volet bloqué ou accrétion de givre, ...).

Les figures du dessin annexé feront bien comprendre comment l'invention peut être réalisée. Sur ces figures, des références identiques désignent des éléments semblables.

La figure 1 est le schéma synoptique d'un indicateur de pilotage conforme à l'invention.

La figure 2 illustre une visualisation mise en oeuvre par un indicateur de pilotage conforme à l'invention.

Les figures 3 à 5 illustrent des visualisations particulières susceptibles d'être mises en oeuvre par un indicateur de pilotage conforme à l'invention.

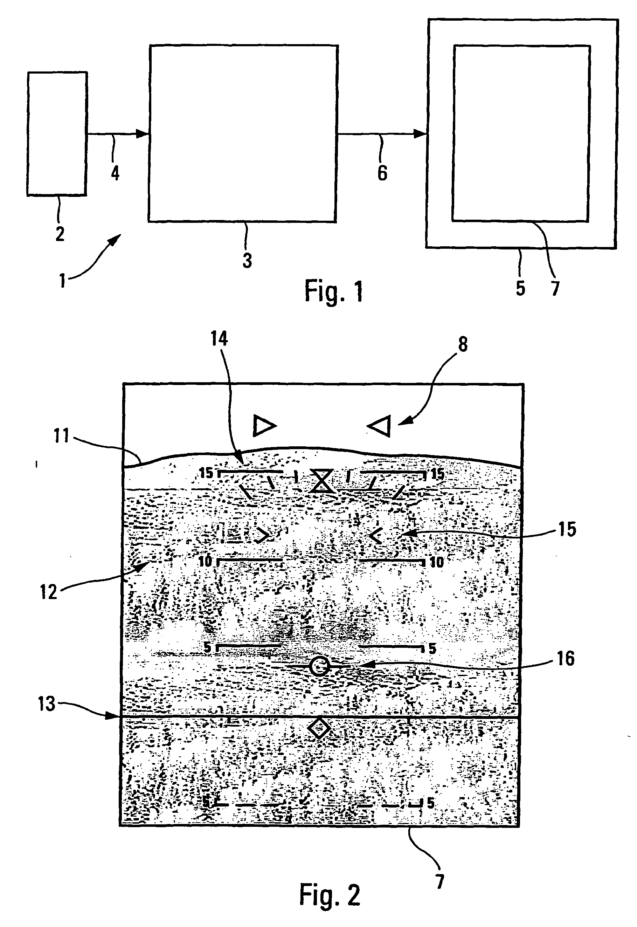

L'indicateur de pilotage 1 conforme à l'invention et représenté schématiquement sur la figure 1 est destiné à aider un pilote d'un aéronef, en particulier d'un avion de transport militaire, lors du pilotage de cet aéronef.

Pour ce faire, ledit indicateur de pilotage 1 qui est embarqué sur l'aéronef, comporte :

- un ensemble 2 de sources d'informations précisées ci-dessous ;
- une unité de calcul 3 qui est reliée par une liaison 4 audit ensemble 2 de sources d'informations ; et
- un dispositif de visualisation 5 qui est relié par une liaison 6 à ladite unité de calcul 3 et qui comporte un écran de visualisation 7.

Selon l'invention :

- l'ensemble 2 de sources d'informations fournit, notamment, certaines des informations suivantes :

  ■ la vitesse actuelle de l'aéronef ;
  ■ le régime moteur actuel ;
  ■ le régime moteur maximal ;
  ■ la vitesse optimale de montée ;
  ■ l'altitude actuelle de l'aéronef ; et
  ■ une polaire aérodynamique de l'aéronef, permettant d'intégrer l'effet de la variation de la vitesse sur la vitesse courante mesurée, relativement à une vitesse de montée optimale, ainsi que la dégradation aérodynamique due à une panne moteur ;

- ladite unité de calcul 3 détermine, à partir au moins des informations précitées issues dudit ensemble 2 de sources d'informations, la valeur d'au moins une pente totale maximale de l'aéronef, comme précisé ci-dessous ; et

- ledit dispositif de visualisation 5 est un dispositif de visualisation tête haute et présente, sur l'écran de visualisation 7, au moins un moyen d'indication 8, 9, 10 qui indique la valeur de ladite pente totale maximale et qui est présenté en surimpression du terrain 1 2 existant vers l'avant de l'aéronef, comme représenté par exemple sur la figure 2.

Dans le mode de réalisation préféré représenté sur cette figure 2, ladite unité de calcul 3 détermine ladite pente totale maximale comme la pente de l'aéronef, s'il volait à une vitesse optimale permettant d'obtenir la pente de montée la plus importante, et ledit moyen d'indication 8 indiquant cette pente totale maximale, est associé au relief 11 du terrain 12, visible en surimpression sur ledit écran de visualisation 7 et permet ainsi de montrer si l'aéronef est susceptible de voler au-dessus dudit relief 11 du terrain 12 lorsqu'il vole à ladite vitesse optimale. Ceci est le cas dans l'exemple représenté sur la figure 2, puisque ledit moyen d'indication 8, qui comporte par exemple deux flèches, est bien situé au-dessus du relief 11 dudit terrain 12. L'exemple de la figure 2 indique que l'aéronef peut passer au-dessus du relief 11, si le pilote sélectionne le régime moteur maximal, réduit sa vitesse (ou dans une variante précisée ci-dessous, maintient sa vitesse actuelle) et pilote l'aéronef de sorte que le vecteur vitesse sol (indiqué par un moyen d'indication 16) arrive au niveau dudit moyen d'indication 8 indiquant cette pente totale optimale.

Ainsi, grâce à l'indicateur de pilotage 1 conforme à l'invention, le pilote dispose d'une information concernant la pente maximale que l'aéronef est en mesure de voler s'il sélectionne la pleine poussée. Le pilote a donc connaissance des performances maximales réelles de l'aéronef, concernant la pente de montée et permettant de franchir le relief 11 (crêtes, ...) du terrain 12 à l'avant de l'aéronef.

En variante, ladite unité de calcul 3 peut déterminer ladite pente totale maximale comme la pente de l'aéronef s'il volait en maintenant sa vitesse courante et en sélectionnant la poussée maximale disponible sur les moteurs. Dans cette variante, le pilote a connaissance des performances de montée maximales réelles de l'aéronef, en maintenant la vitesse de vol actuelle.

Par conséquent, la présente invention est particulièrement avantageuse lors d'un vol à basse altitude et permet ainsi au pilote de faire voler son aéronef le plus bas possible (pour bénéficier du meilleur masquage possible par le terrain 12), tout en lui indiquant s'il est toujours en mesure de faire voler l'aéronef au-dessus des crêtes les plus hautes. Pour que cela soit vrai, il suffit que ledit moyen d'indication 8 se trouve au-dessus du relief 11 du terrain 12.

En outre, comme ledit moyen d'indication 8 est présenté directement en surimpression du relief 11 réel, l'indicateur de pilotage 1 conforme à l'invention est très avantageux d'un point de vue opérationnel.

Dans un mode de réalisation préféré, l'unité de calcul 3 calcule ladite pente totale maximale $\gamma$Tmax à partir de la mesure de la pente totale actuelle de vol, corrigée par :

- la variation de pente totale due à la variation de poussée moteur et de traînée provoquée par la sélection de la poussée maximale, à la vitesse actuelle ($\Delta\gamma$TFN) ;
- la variation de pente totale due à la variation de poussée et de traînée provoquée par la panne moteur anticipée, à la vitesse actuelle ($\Delta\gamma$TOEI) ; et
- la variation de pente totale due à la variation de poussée et de traînée due à la variation de vitesse, de la vitesse actuelle vers la vitesse optimale de meilleure pente ($\Delta\gamma$TDV).

Ainsi, on obtient yTmax = $\gamma$TS + $\Delta\gamma$TFN + $\Delta\gamma$TOEI + $\Delta\gamma$TDV avec $\gamma$TS, la pente totale actuelle de vol, déterminée à partir de l'état cinétique et de l'attitude de l'aéronef, soit basiquement :

$$\gamma TS = \gamma S + \frac{1}{g}\frac{\delta Vs}{\delta t}$$

avec :

- g : l'accélération de la pesanteur ;
- $\gamma$S : la pente sol mesurée de l'aéronef ; et
- Vs : la vitesse sol mesurée de l'aéronef.

Les différentes mesures sont réalisées par des moyens appropriés faisant partie de l'ensemble 2 de sources d'informations.

La variation de pente totale due à la variation de régime moteur, tous moteurs en fonctionnement, à la vitesse actuelle, s'exprime par la relation suivante :

$$\Delta\gamma TFN = \frac{1}{mg}\left[neng\left(FNmax - FN\right) - \Delta TFN\right]$$

dans laquelle :

- neng est le nombre de moteurs en fonctionnement ;
- FN est la poussée actuelle délivrée par chaque moteur, obtenue par la mesure de paramètres moteur ;
- FNmax est la poussée maximale que peut délivrer chaque moteur à la vitesse actuelle. Elle est obtenue soit par les systèmes moteur, soit par un modèle intégré dans l'ensemble 2 ;
- g est l'accélération de la pesanteur ;
- m est la masse de l'aéronef, fournie par des systèmes de l'aéronef ; et
- ΔTFN est la variation de la force de traînée due à la variation de poussée (FNmax-FN), obtenue par un modèle qui est intégré dans l'ensemble 2.

En outre, la variation de pente totale due à l'anticipation de la panne moteur, à la vitesse actuelle, vérifie la relation suivante :

$$\Delta\gamma TOEI = \frac{1}{mg}\left[FNWML - FNmax - \Delta TOEI\right]$$

dans laquelle :

- FNWML est la poussée résiduelle du moteur en panne ; et
- ΔTOEI est la variation de la force de traînée due à l'équilibrage aérodynamique du moteur en panne, obtenue par un modèle intégré dans l'ensemble 2.

Par ailleurs, la variation de pente totale due à la variation de vitesse de la vitesse actuelle à la vitesse optimale de meilleure pente, s'exprime par la relation suivante :

$$\Delta\gamma TDV = \frac{1}{mg}\left[nop\left(FNmaxGD - FNmax\right) - \Delta TDV\right]$$

dans laquelle :

- FNmax est la poussée maximale pour chaque moteur à la vitesse actuelle ;
- FNmaxGD est la poussée maximale pour chaque moteur à la vitesse optimale de meilleure pente, obtenue par un modèle intégré dans l'ensemble 2 ;
- nop est le nombre de moteurs en fonctionnement et correspond à :

  ■ neng, si tous les moteurs fonctionnent ; et
  ■ neng-1, pour anticiper une panne moteur ; et

- ΔTDV est la variation de la force de traînée due à la variation de vitesse de la vitesse actuelle à la vitesse optimale de meilleure pente.

Par ailleurs, le dispositif de visualisation 5 peut également afficher sur l'écran de visualisation 7, au moins les éléments suivants représentés sur la figure 2 :

- une échelle de cap 13 ;
- une échelle de pente 14 ;
- un moyen d'indication 15, par exemple deux chevrons, indiquant la pente totale courante de l'aéronef ; et
- le moyen d'indication 16 indiquant la position du vecteur vitesse sol.

Dans un mode de réalisation particulier :

- ladite unité de calcul 3 détermine :

■ une première pente totale correspondant à une pente totale maximale γTmaxAEO avec tous les moteurs de l'aéronef en fonctionnement, c'est-à-dire dans une phase AEO ("All Engine Operative" en anglais), à la puissance continue des moteurs ; et
■ une seconde pente totale correspondant à une pente totale maximale γTmaxOEI avec un moteur de l'aéronef en panne, c'est-à-dire dans un phase OEI ("One Engine Inoperative" en anglais), avec une puissance maximale sur les autres moteurs ; et

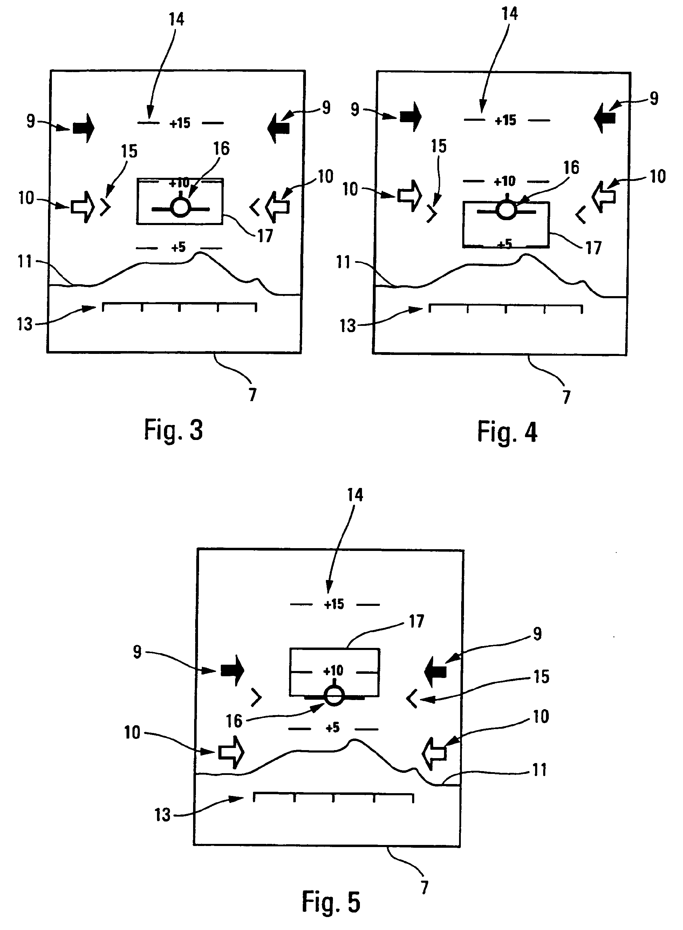

- ledit dispositif de visualisation 5 présente, sur l'écran de visualisation 7, deux moyens d'indications 9 et 10 indiquant respectivement lesdites première et seconde pentes totales, comme représenté sur les figures 3 à 5.

Dans ce cas, l'indicateur de pilotage 1 visualise la performance réelle de l'aéronef dans le plan vertical.
En plus des éléments précités, le dispositif de visualisation 5 peut également afficher sur l'écran de visualisation 7, comme représenté sur les figures 3 à 5, un moyen d'indication 17 indiquant une pente de consigne (c'est-à-dire la pente que le plan de vol commande de voler), qui est par exemple symbolisée par un rectangle en trait fin. On notera que le moyen d'indication 17 est également intéressant quand l'aéronef n'est pas guidé automatiquement, et que le pilote suit une consigne de vol.
En outre :

- le moyen d'indication 9 comporte deux flèches pleines disposées de part et d'autre de l'écran de visualisation 7, en regard de l'échelle de pente 14 ; et
- le moyen d'indication 10 comporte deux flèches évidées disposées également de part et d'autre de l'écran de visualisation 7, en regard de l'échelle de pente 14.

On notera que si le moyen d'indication 16 indiquant le vecteur vitesse sol est placé au centre du moyen d'indication 17 indiquant la pente de consigne, l'aéronef est en train de voler à ladite pente de consigne à la bonne vitesse.
Dans les exemples représentés sur les figures 3 à 5, on considère que le moyen d'indication 16 (vecteur vitesse sol) est aligné sur le moyen d'indication 15 (pente totale courante), ce qui signifie que l'aéronef présente une vitesse stabilisée, c'est-à-dire n'accélère pas, ni ne décélère.
Dans l'exemple représenté sur la figure 3, l'aéronef se trouve dans la condition où la consigne correspond à la limite de montée OEI. Il vole le long d'un segment de trajectoire à pente constante, défini par le plan de vol. La seconde pente totale OEI (moyen d'indication 10) est identique à celle définie par le plan de vol et la première pente totale (moyen d'indication 9) lui est supérieure d'environ 7°. Dans cet exemple, même en cas de panne d'un moteur survenant lors du vol, l'aéronef est capable de poursuivre son vol en maintenant à la fois sa vitesse courante et la pente courante du segment défini par le plan de vol.
En outre, dans l'exemple de la figure 4, l'aéronef se trouve en condition "conservative", puisque la seconde pente totale OEI (moyen d'indication 10) est légèrement supérieure à la pente requise pour le vol (moyen d'indication 17).
Dans cet exemple, même en cas de panne d'un moteur survenant lors du vol, l'aéronef est capable de poursuivre son vol en maintenant la pente courante, telle que définie par le plan de vol. L'aéronef dispose même d'une réserve d'énergie.
Par ailleurs, dans l'exemple représenté sur la figure 5, l'aéronef se trouve en condition "critique". En effet, la pente sol (moyen d'indication 16) est inférieure à la pente requise pour le vol (moyen d'indication 17). De plus, la seconde pente totale OEI (moyen d'indication 10) est très inférieure à la pente requise.
Comme la pente requise ou pente de consigne (moyen d'indication 17) est supérieure à la seconde pente totale (moyen d'indication 10), on est en présence d'un calcul de pente non adapté en cas de panne moteur, sur le plan de vol. Cette situation peut résulter d'une défaillance des calculs de génération de la consigne (donc du plan de vol) ou bien de conditions météo réelles qui sont très différentes de celles qui ont servi à construire le plan de vol, ou d'un aéronef dont l'état est dégradé par rapport à l'état utilisé pour la modélisation (dégradation aérodynamique : trappe restée ouverte, train bloqué en position vitesse, accrétion de givre, ..., ou dégradation moteur : prémices d'une panne, hélice abîmée, ...).
Par conséquent, si dans cet exemple, une panne survient sur un moteur de l'aéronef lors du vol, l'aéronef ne pourra pas tenir la pente requise. Il risque donc de passer sous le profil vertical défini et de s'approcher dangereusement du relief 11 du terrain 12.

**Revendications**

1. Indicateur de pilotage pour un aéronef, ledit indicateur de pilotage (1) comportant :

   - un ensemble (2) de sources d'informations ;
   - une unité de calcul (3) qui est reliée audit ensemble (2) de sources d'informations et qui détermine, à partir d'informations issues dudit ensemble (2) de sources d'informations, au moins une pente totale maximale de l'aéronef, qui correspond à la poussée maximale disponible sur les moteurs et est obtenue à partir de la mesure de la performance actuelle de l'aéronef ; et
   - un dispositif de visualisation (5) tête haute qui comporte un écran de visualisation (7), qui est relié à ladite unité de calcul (3), et qui présente, sur l'écran de visualisation (7), au moins un moyen d'indication (8) qui indique ladite pente totale maximale,

   **caractérisé en ce que** ledit dispositif de visualisation (5) tête haute présente ledit moyen d'indication (8) sur l'écran de visualisation (7) en l'associant au relief (11) du terrain (12) existant vers l'avant de l'aéronef et visible en surimpression sur ledit écran de visualisation (7) de manière à permettre de montrer, lorsque ledit moyen d'indication (8) est situé au-dessus du relief (11) visible, que l'aéronef est susceptible de voler au-dessus dudit relief (11) du terrain (12) lorsqu'il vole selon ladite pente totale maximale.

2. Indicateur de pilotage selon la revendication 1,
   **caractérisé en ce que** ledit ensemble (2) de sources d'informations fournit à l'unité de calcul (3) au moins certaines des informations suivantes :

   l'état cinétique actuel, l'état atmosphérique actuel, l'altitude actuelle et une polaire aérodynamique de l'aéronef.

3. Indicateur de pilotage selon l'une des revendications 1 et 2,
   **caractérisé en ce que** ladite unité de calcul (3) détermine ladite pente totale maximale pour la vitesse optimale de montée.

4. Indicateur de pilotage selon l'une des revendications 1 et 2,
   **caractérisé en ce que** ladite unité de calcul (3) détermine ladite pente totale maximale pour la vitesse actuelle.

5. Indicateur de pilotage selon l'une quelconque des revendications précédente,
   **caractérisé en ce que** ladite unité de calcul (3) comporte:

   - un moyen pour déterminer une pente totale actuelle de vol $\gamma TS$ ;
   - un moyen pour déterminer une variation de pente totale $\Delta\gamma TFN$ due à une variation de poussée moteur et de traînée provoquée par la sélection d'une poussée maximale, à la vitesse actuelle ;
   - un moyen pour déterminer une variation de pente totale $\Delta\gamma TOEI$, due à une variation de poussée et de traînée provoquée par une panne moteur anticipée, à la vitesse actuelle ;
   - un moyen pour déterminer une variation de pente totale $\Delta\gamma TDV$ due à une variation de vitesse, de la vitesse actuelle vers une vitesse optimale de meilleure pente ; et
   - un moyen pour faire la somme $\gamma Tmax = \gamma TS + \Delta\gamma TFN + \Delta\gamma TOEI + \Delta\gamma TDV$ afin d'obtenir ladite pente totale maximale $\gamma Tmax$.

6. Indicateur de pilotage selon l'une quelconque des revendications précédentes,
   **caractérisé en ce que :**

   - ladite unité de calcul (3) détermine :

     ■ une première pente totale correspondant à une pente totale maximale avec tous les moteurs de l'aéronef en fonctionnement, à la puissance continue des moteurs ; et
     ■ une seconde pente totale correspondant à une pente totale maximale avec un moteur de l'aéronef en panne, et une puissance maximale sur les autres moteurs ; et

   - ledit dispositif de visualisation (5) présente, sur l'écran de visualisation (7), deux moyens d'indications (9, 10) indiquant respectivement lesdites première et seconde pentes totales.

**7.** Aéronef,
**caractérisé en ce qu'**il comporte un indicateur de pilotage (1) tel que celui spécifié sous l'une quelconque des revendications 1 à 6.

**Claims**

**1.** A flight control indicator for an aircraft, said flight control indicator (1) comprising:

- a set (2) of information sources;
- a computation unit (3) which is connected to said set (2) of information sources and which determines, on the basis of information emanating from said set (2) of information sources, at least one maximum total slope of the aircraft, which corresponds to the maximum thrust available on the engines and is obtained on the basis of the measurement of the current performance of the aircraft; and
- a head-up display device (5) which comprises a display screen (7), which is connected to said computation unit (3), and which presents, on the display screen (7), at least one means of indication (8) which indicates said maximum total slope,

**characterized in that** said head-up display device (5) presents said means of indication (8) on the display screen (7) by associating it with the relief (11) of the terrain (12) existing in front of the aircraft and visible superimposed on said display screen (7) in order to make it possible to show, when said means of indication (8) is situated above the visible relief (11), whether the aircraft is capable of flying above said relief (11) of the terrain (12) when it is flying at said maximum total slope.

**2.** The flight control indicator as claimed in claim 1, **characterized in that** said set (2) of information sources provides the computation unit (3) with at least some of the following information: the current kinetic state, the current atmospheric state, the current altitude and an aerodynamic polar of the aircraft.

**3.** The flight control indicator as claimed in one of claims 1 and 2,
**characterized in that** said computation unit (3) determines said maximum total slope for the optimal climb speed.

**4.** The flight control indicator as claimed in one of claims 1 and 2,
**characterized in that** said computation unit (3) determines said maximum total slope for the current speed.

**5.** The flight control indicator as claimed in any one of the preceding claims,
**characterized in that** said computation unit (3) comprises:

- a means for determining a current total flight slope $\gamma TS$;
- a means for determining a variation $\Delta\gamma TFN$ in total slope due to a variation in engine thrust and in drag caused by selecting the maximum thrust, at the current speed;
- a means for determining a variation $\Delta\gamma TOEI$ in total slope due to a variation in thrust and in drag caused by an anticipated engine fault, at the current speed;
- a means for determining a variation $\Delta\gamma TDV$ in total slope due to a variation in speed, from the current speed to an optimal speed of best slope; and
- a means for calculating the sum $\gamma Tmax = \gamma TS + \Delta\gamma TFN + \Delta\gamma TOEI + \Delta\gamma TDV$ for obtaining said maximum total slope $\gamma Tmax$.

**6.** The flight control indicator as claimed in any one of the preceding claims,
**characterized in that**:

- said computation unit (3) determines:

■ a first total slope corresponding to a maximum total slope with all the engines of the aircraft operational, at the continuous power of the engines; and
■ a second total slope corresponding to a maximum total slope with an engine of the aircraft faulty, with maximum power on the other engines; and

- said display device (5) presents, on the display screen (7), two means of indication (9, 10) indicating respectively said first and second total slopes.

7. An aircraft,
   **characterized in that** it comprises a flight control indicator (1) such as that specified under any one of claims 1 to 6.

**Patentansprüche**

1. Steuerungsanzeige für ein Flugzeug, wobei die Steuerungsanzeige (1) umfasst:

   - eine Gruppe (2) von Informationsquellen
   - eine Recheneinheit (3), die mit der Gruppe (2) von Informationsquellen verbunden ist und die aus Informationen, die von der Gruppe (2) von Informationsquellen bereitgestellt werden, mindestens eine maximale Gesamtsteigung des Flugzeugs bestimmt, die dem an den Motoren verfügbaren Maximalschub entspricht und die aus der Messung der aktuellen Leistung des Flugzeugs ermittelt wird und
   - eine Anzeigeeinrichtung (5) in Kopfhöhe, die mit der Recheneinheit (3) verbunden ist, die einen Anzeigebildschirm (7) umfasst, und die auf dem Anzeigebildschirm (7) mindestens ein Anzeigemittel (8) darstellt, das die maximale Gesamtsteigung anzeigt,

   **dadurch gekennzeichnet, dass** die Anzeigeeinrichtung (5) in Kopfhöhe das Anzeigemittel (8) auf dem Anzeigebildschirm (7) so darstellt, dass es dem Relief (11) des Geländes (12), das vor dem Flugzeug existiert und auf dem Anzeigebildschirm (7) durch Einblendung sichtbar ist, so zugeordnet ist, dass, wenn das Anzeigemittel (8) oberhalb des sichtbaren Reliefs (11) angeordnet ist, angezeigt werden kann, dass das Flugzeug das Relief (11) des Geländes (12) überfliegen kann, wenn es gemäß der maximalen Gesamtsteigung fliegt.

2. Steuerungsanzeige nach Anspruch 1, **dadurch gekennzeichnet, dass** die Gruppe (2) von Informationsquellen der Recheneinheit (3) mindestens einige der folgenden Informationen liefert: den aktuellen kinetischen Zustand, den aktuellen Atmosphärenzustand, die aktuelle Höhe und eine aerodynamische Polare des Flugzeugs.

3. Steuerungsanzeige nach einem der Ansprüche 1 und 2, **dadurch gekennzeichnet, dass** die Recheneinheit (3) die maximale Gesamtsteigung für die optimale Steiggeschwindigkeit bestimmt.

4. Steuerungsanzeige nach einem der Ansprüche 1 und 2, **dadurch gekennzeichnet, dass** die Recheneinheit (3) die maximale Gesamtsteigung für die aktuelle Geschwindigkeit bestimmt.

5. Steuerungsanzeige nach einem der vorhergehenden Ansprüche,
   **dadurch gekennzeichnet, dass** die Recheneinheit (3) umfasst:

   - ein Mittel zur Bestimmung einer aktuellen Gesamtsteigung im Flug $\gamma TS$
   - ein Mittel zur Bestimmung einer Gesamtsteigungsänderung $\Delta\gamma TFN$ aufgrund einer Änderung des Antriebsschubs und des Widerstands, verursacht durch die Wahl eines Maximalschubs bei der aktuellen Geschwindigkeit
   - ein Mittel zur Bestimmung einer Gesamtsteigungsänderung $\Delta\gamma TOEI$ aufgrund einer Änderung des Schubs und des Widerstands, verursacht durch einen antizipierten Motorausfall bei der aktuellen Geschwindigkeit
   - ein Mittel zur Bestimmung einer Gesamtsteigungsänderung $\Delta\gamma TDV$ aufgrund einer Änderung der Geschwindigkeit von der aktuellen Geschwindigkeit zu einer optimalen Geschwindigkeit bei bester Steigung und
   - ein Mittel zur Bildung der Summe $\gamma Tmax = \gamma TS + \Delta\gamma TFN + \Delta\gamma TOEI + \Delta\gamma TDV$, um die maximale Gesamtsteigung $\gamma Tmax$ zu erhalten.

6. Steuerungsanzeige nach einem der vorhergehenden Ansprüche, **dadurch gekennzeichnet, dass**:

   - die Recheneinheit (3) bestimmt:

     ■ eine erste Gesamtsteigung, die einer maximalen Gesamtsteigung bei Betrieb aller Motoren des Flugzeugs unter Dauerleistung der Motoren entspricht und
     ■ eine zweite Gesamtsteigung, die einer maximalen Gesamtsteigung bei Ausfall eines Motors des Flugzeugs und maximaler Leistung an den anderen Motoren entspricht und

   - die Anzeigeeinrichtung (5) auf dem Anzeigebildschirm (7) zwei Anzeigemittel (9, 10) darstellt, die jeweils die erste und die zweite Gesamtsteigung anzeigen.

7. Flugzeug,
   **dadurch gekennzeichnet, dass** es eine Steuerungsanzeige (1), wie die unter einem beliebigen der Ansprüche 1 bis 6 spezifizierte, aufweist.

**Fig. 1**

**Fig. 2**

Fig. 3

Fig. 4

Fig. 5

**EP 1 598 720 B1**

## RÉFÉRENCES CITÉES DANS LA DESCRIPTION

**Documents brevets cités dans la description**

- US 6262674 B